# EUROPÄISCHE PATENTSCHRIFT

(11) **EP 2 035 262 B1**
(45) Veröffentlichungstag und Bekanntmachung des Hinweises auf die Patenterteilung: **18.11.2009**
(21) Anmeldenummer: 07785807.4
(22) Anmeldetag: 06.06.2007
(51) Int. Cl.: B60R 21/231

(54) **GASSACK FÜR EIN KRAFTFAHRZEUG UND GASSACK-EINHEIT**
AIRBAG FOR A MOTOR VEHICLE AND AIRBAG UNIT
SAC DE GAZ POUR UN VÉHICULE AUTOMOBILE ET UNITÉ DE SAC DE GAZ

(30) Priorität: 23.06.2006 DE 102006029295
(43) Veröffentlichungstag der Anmeldung: 18.03.2009
(73) Patentinhaber: Autoliv Development AB, 447 83 Vargarda (SE)
(72) Erfinder: ALENSPACH, Guillaume, F-76520 Boos (FR); DESNOYERS, Cyrille, 76360 Villers Escalles (FR); SIEWIERA, Thomas, F-57890 Diesen (FR)
(74) Vertreter: Schön, Thilo
(86) Internationale Anmeldenummer: PCT/EP2007/005001
(87) Internationale Veröffentlichungsnummer: WO 2007/147486

(56) Entgegenhaltungen:
- EP-A- 1 462 321
- WO-A-2004/106122
- US-A1- 2002 105 174
- US-A1- 2003 132 615
- US-A1- 2005 121 884

## Beschreibung

### Technisches Gebiet der Erfindung

Die Erfindung betrifft einen Gassack für ein Kraftfahrzeug nach dem Oberbegriff des Anspruchs 1 sowie eine Gassack-Einheit nach Anspruch 8.

Insbesondere bei Seiten- und Vorhanggassäcken ist es bekannt, bei den Gassäkken zwei Lagen, zumeist Gewebelagen, vorzusehen, welche entlang ihres Randes miteinander verbunden sind und so den Hauptgasraum, welcher in befülltem Zustand dem Schutz des Insassen dient, umgeben. Zumeist wird der Gassack vollständig gefertigt und in einem anschließenden Montageschritt wird der Gasgenerator ganz oder teilweise ins Innere des Gassackes eingebracht. Hierzu muss der Gassack eine Öffnung aufweisen, durch welche der Gasgenerator eingeführt wird. Häufig befindet sich diese Öffnung am Rand des Gassacks, wo die beiden Lagen, welche die Außenwände des Gassacks bilden, miteinander verbunden sind. Die Öffnung, durch welche der Gasgenerator ins Innere geführt wird, oder durch welche er ins Innere des Gassacks durchtritt, stellt häufig eine unerwünschte Leckage-Quelle dar.

### Stand der Technik

Aus der gattungsbildenden WO 2004/106122 A1 ist eine Gassack-Einheit bekannt, bei der sich der Gasgenerator vollständig im inneren des Gassacks befindet. Es ist hier eine Lasche vorgesehen, mit deren Hilfe die Öffnung, durch welche der Gasgenerator ins Innere des Gassacks eingeführt wird, verschlossen werden kann. Eine solche Lösung des Leckageproblemes hat jedoch zwei Nachteile: Zum einen macht sie einen weiteren Montageschritt, nämlich das Schließen der Lasche, notwendig, welcher vergessen werden kann, so dass sich dann nicht die ideale Leistung der Gassack-Einheit im Bedarfsfall einstellt. Weiterhin kann diese Form der Abdichtung nur dann angewendet werden, wenn sich der Gasgenerator vollständig innerhalb des Gassacks befindet, nicht jedoch in Fällen, in denen ein hinteres Ende aus dem Gassack herausragt.

### Gegenstand der Erfindung

Hiervon ausgehend ist es Aufgabe der Erfindung, einen Gassack bzw. eine aus einem solchen Gassack und einem Gasgenerator bestehende Gassack-Einheit dahingehend weiterzubilden, dass eine gute Abdichtung der zum Einführen des Gasgenerators vorgesehenen Öffnung erreicht wird, ohne dass man nach dem Einführen einen weiteren Montageschritt durchführen müsste. Das Prinzip für die Abdichtung soll hierbei sowohl für Gassack-Einheiten anwendbar sein, bei denen sich der Gasgenerator vollständig innerhalb des Gassacks befindet, als auch bei Gassack-Einheiten, bei denen der Gasgenerator ins Innere des Gassacks hineinragt.

Diese Aufgabe wird durch einen Gassack mit den Merkmalen des Anspruchs 1 bzw. durch eine Gassack-Einheit mit den Merkmalen des Anspruchs 8 gelöst.

Die Öffnung befindet sich in einem Abschnitt des Randes, also dort, wo die beiden die Seitenwände bildenden Lagen miteinander verbunden, beispielsweise vernäht oder verschweißt sind. Erfindungsgemäß sind im Bereich der Öffnung eine dritte und eine vierte Lage vorgesehen, welche sich zwischen den beiden ersten Lagen befinden, so dass der Gassack im Bereich der Öffnung vierlagig ausgebildet ist. Somit wird ein Kanal gebildet, welcher die Öffnung mit dem Hauptgasraum verbindet. Zwischen der ersten und der dritten und der zweiten und der vierten Lage ist somit wenigstens eine Tasche gebildet, welche mit dem Hauptgasraum verbunden ist. Wird nun der Hauptgasraum mit Gas befüllt, so gelangt Gas auch in diese Tasche, welche hierdurch wulstartig aufgeblasen wird, so dass dritte und vierte Wand aufeinander bzw. auf die Wandung eines im Kanal geführten Gasgenerators drücken, so dass der Kanal hinreichend gasdicht abgeschlossen wird, so dass kein oder nur wenig Gas vom Hauptgasraum nach außen entweichen kann. Mit steigendem Druck im Hauptgasraum wird sogar noch die Dichtigkeit erhöht. Die Abdichtung der Öffnung geschieht also erst beim Befüllen des Gassacks, was natürlich ausreichend ist, da im Ruhezustand keine Dichtigkeit des Gassacks gefordert ist.

Man sieht, dass kein zusätzlicher Montageschritt nach Einführen des Gasgenerator notwendig ist, und dass das erfindungsgemäße System sowohl bei Gassack-Einheiten, bei denen sich der Gasgenerator vollständig innerhalb des Gassacks befindet, als auch bei Gassack-Einheiten, bei denen sich der Gasgenerator ins Innere des Gasgenerators erstreckt, anwendbar ist.

Der Fertigungs-Mehraufwand ist gegenüber herkömmlichen Gassäcken gering, insbesondere können die notwendigen Verbindungslinien Abschnitte der Naht sein, welche ohnehin zum Verbinden der ersten und zweiten Lage benötigt wird.

In einer bevorzugten Ausführungsform werden dritte und vierte Lage einfach durch Umschlagen jeweils eines Bereichs der beiden Zuschnitte, welche die erste und zweite Lagen bilden, gebildet.

In einer weiter bevorzugten Ausführungsform sind zumindest die inneren dritten und vierten Lagen sind mittels wenigstens zwei Verbindungslinien miteinander verbunden, welche sich von der Öffnung in Richtung des Hauptgasraumes erstrecken, so dass zwischen den Verbindungslinien der Kanal gebildet wird. Häufig ist es sinnvoll, alle vier Lagen mittels den Verbindungslinien zu verbinden, da somit auch eine Lagefixierung der inneren Lagen erreicht wird.

Weitere Vorteile und bevorzugte Ausführungsformen ergeben sich aus den weiteren Unteransprüchen sowie aus den nun mit Bezug auf die Figuren näher dargestellten Ausführungsbeispielen. Hierbei zeigen:

### Kurzbeschreibung der Zeichnungen

- Figur 1: Einen ersten Zuschnitt,
- Figur 2: einen zweiten Zuschnitt,
- Figur 3: den ersten Zuschnitt aus Figur 1 nach Umschlagen des oberen Bereichs,
- Figur 3a: einen Schnitt entlang der Ebene A-A aus Figur 3,
- Figur 4: den zweiten Zuschnitt aus Figur 2 nach Umschlagen des oberen Bereichs,
- Figur 4a: einen Schnitt entlang der Ebene B-B aus Figur 4,
- Figur 5: einen fertig vernähten Gassack in einer Draufsicht,
- Figur 6: einen Schnitt entlang der Ebene C-C aus Figur 5,
- Figur 7: eine Gassack-Einheit bestehend aus dem Gassack aus Figur 5 und einem in diesen Gassack eingeführten Gasgenerator,
- Figur 8: einen Schnitt entlang der Ebene D-D aus Figur 7 bei Befüllung des Gassacks
- Figur 9: einen Schnitt entlang der Ebene E-E aus Figur 7 bei Befüllung des Gassacks, und
- Figur 10: ein weiteres Ausführungsbeispiel einer Gassack-Einheit in einer Draufsicht in einem ersten Montagezustand,
- Figur 11: die Gassack-Einheit aus Figur 10 in einem zweiten Montagezustand,
- Figur 12: die Gassack-Einheit aus Figur 10 im Endmontagözustand,
- Figur 13: einen Schnitt entlang der Ebene F-F aus Figur 12.

### Beschreibung bevorzugter Ausführungsformen

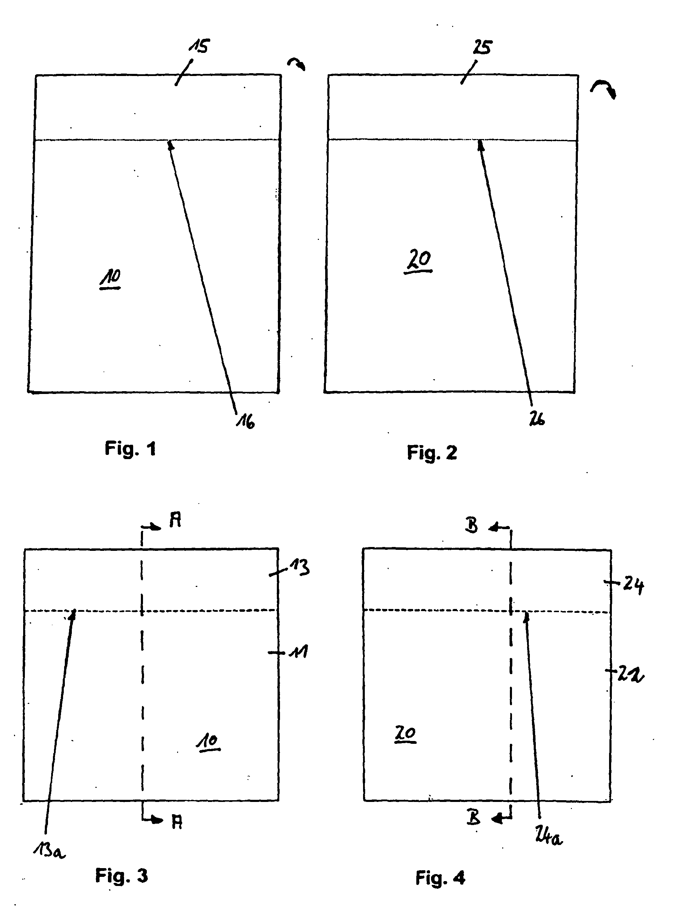

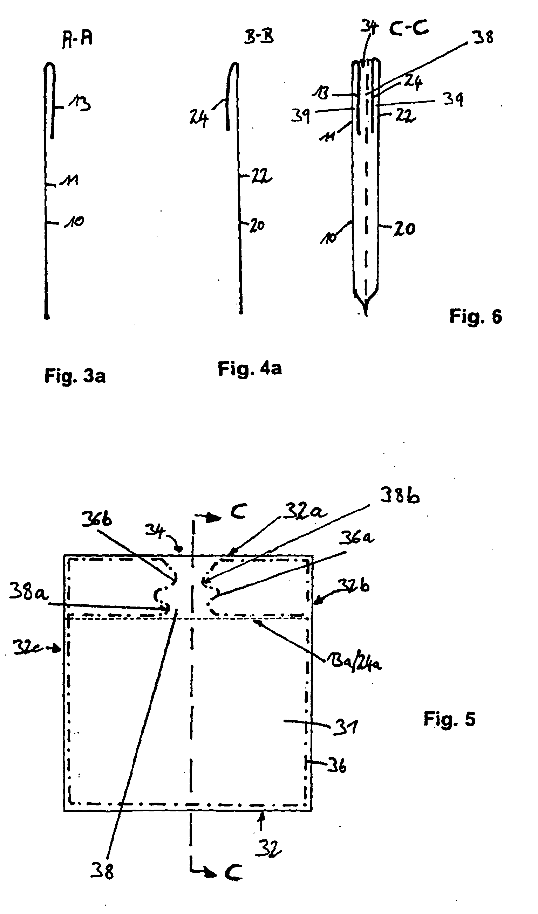

Die Figur 1 zeigt einen ersten Zuschnitt 10, die Figur 2 zeigt einen zweiten Zuschnitt 20. Die beiden Zuschnitte sind deckungsgleich, aus ihnen wird der Gassack zusammengenäht. Die Zuschnitte bestehen in der Regel aus Gewebe, sie können beispielsweise auch aus Folie oder ähnlichem bestehen. In einem ersten Arbeitsschritt werden die oberen Bereiche 15,25 entlang der Linien 16 bzw. 26 umgeschlagen, so dass die Zuschnitte 10,20 die in den Figuren 3, 3a, 4 und 4a dargestellt Form einnehmen. Man kann diesen Figuren entnehmen, dass der Gassack in dem Bereich, in dem der Haupt-Gasraum entsteht, zweilagig, nämlich bestehend aus einer ersten Lage 11 und einer zweiten Lage 22 ist.

Im oberen Bereich, nämlich dort, wo später die Öffnung entsteht, wird der Gassack vierlagig, nämlich bestehend aus der ersten Lage 11 und der zweiten Lage 22, welche die äußeren Lagen bilden, und den beiden sich zwischen den äußeren Lagen befindenden dritten Lage 13 und vierten Lage 24. Der Gassack wird nun mittels einer einzigen Naht 36 zusammengenäht, bis der in Figur 5 dargestellte Gassack entsteht. Diese Naht 36 umläuft den gesamten Rand 32 des Gassackes, bis auf die Öffnung 34, welche sich im ersten Randabschnitt 32a befindet und offen bleibt. Von dieser Öffnung 34 erstreckt sich die Naht 36 entlang der beiden Verbindungslinien 36a,36b bis an die Kante 13a, 24a der dritten Lage 13 bzw. vierten Lage 24 und von dort nach außen bis zu den beiden Randbereichen 32b und 32c. Hierdurch ergibt sich ein Kanal 38, der durch die beiden Verbindungslinien 36a,36b begrenzt wird und sich von der Öffnung 34 bis in den Haupt-Gasraum 31 erstreckt. Die Verbindungslinien 36a,36b sind so geformt, dass der Kanal 36 zwei Taillen 38a, 38b aufweist.

Zwischen erster Lage 11 und dritter Lage 13 und zweiter Lage 22 und vierter Lage 24 ist jeweils eine Tasche 39 gebildet, welche sich parallel zum Kanal 38 erstreckt und in Verbindung mit dem Haupt-Gasraum 31 steht. Diese Taschen 39 sind am ersten Randabschnitt 32a abgeschlossen, da ja hier die beiden Zuschnitte 10,22 umgeschlagen sind, wie man dies insbesondere auch der Figur 6 entnehmen kann. Das heißt, dass Gas vom Haupt-Gasraum 31 in die Taschen 39 strömen, aus diesen jedoch nicht nach außen austreten kann. Durch die Verbindungslinien wird nicht nur der Kanal geformt und definiert, sondern auch die Position der beiden inneren Lagen 13 und 24 fixiert.

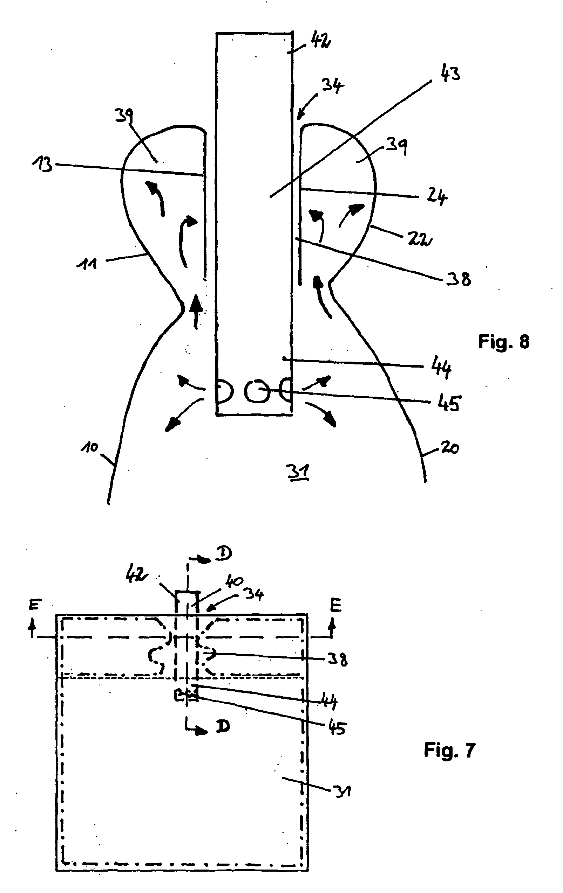

Im abschließenden Montageschritt, wie in Figur 7 gezeigt, wird der Gasgenerator 40 durch die Öffnung 34 in den Gassack eingeführt. In diesem Ausführungsbeispiel erstreckt sich der Gasgenerator derart durch die Öffnung 34 ins Innere des Gassacks 30, dass der vordere Abschnitt 44 mit den Ausströmöffnungen 45 im Haupt-Gasraum 31 angeordnet ist, während der hintere Abschnitt 42 aus dem Gassack 30 herausragt. Der mittlere Abschnitt des Gasgenerators 40 liegt im Kanal 38.

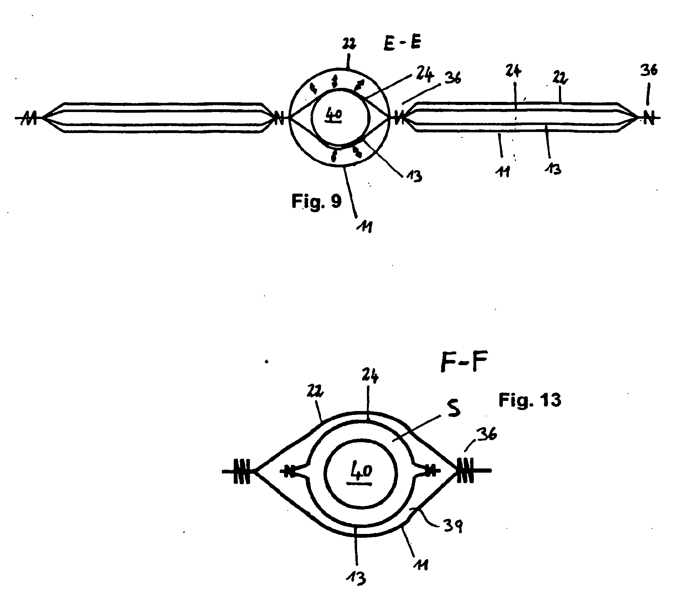

Wird der Gasgenerator betätigt, so strömt Gas durch die Ausströmöffnungen 45 zunächst in den Haupt-Gasraum 31 und füllt diesen, so dass der Druck im Haupt-Gasraum ansteigt. Aufgrund des steigenden Druckes im Haupt-Gasraum 31 strömt sodann auch Gas in die beiden Taschen 39, wie dies insbesondere in Figur 8 dargestellt ist. Die beiden Taschen 39 vergrößern hierdurch ihr Volumen und die dritte Lage 13 und die vierte Lage 24 drücken auf die Wandung des mittleren Abschnitts 43 des Gasgenerators und dichten somit den Kanal 38 gegen ein Ausströmen von Gas aus dem Haupt-Gasraum 31 nach außen hin ab (siehe hierzu auch Figur 9). Durch die Taillierung des Kanals wird die angestrebte Dichtigkeit verbessert. Somit dichtet sich der Gassack bei Betätigung des Gasgenerators selbst ab, wobei die Abdichteleistung mit steigendem Innendruck im Haupt-Gasraum immer weiter zunimmt.

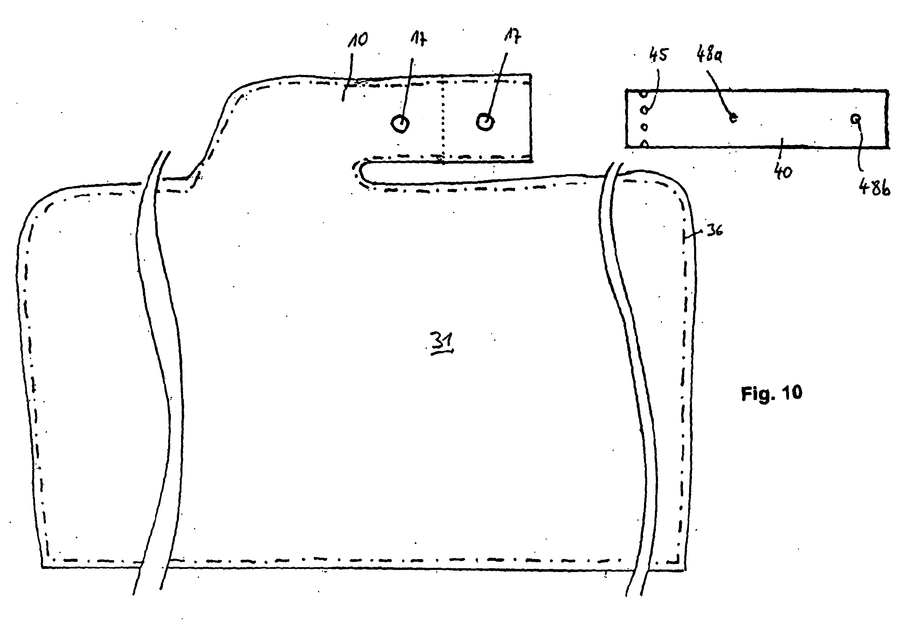

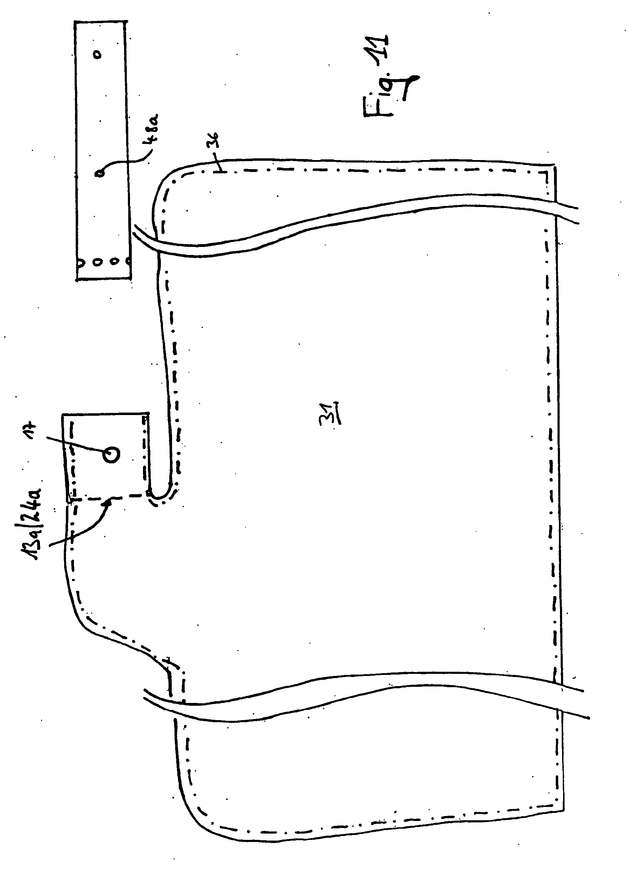

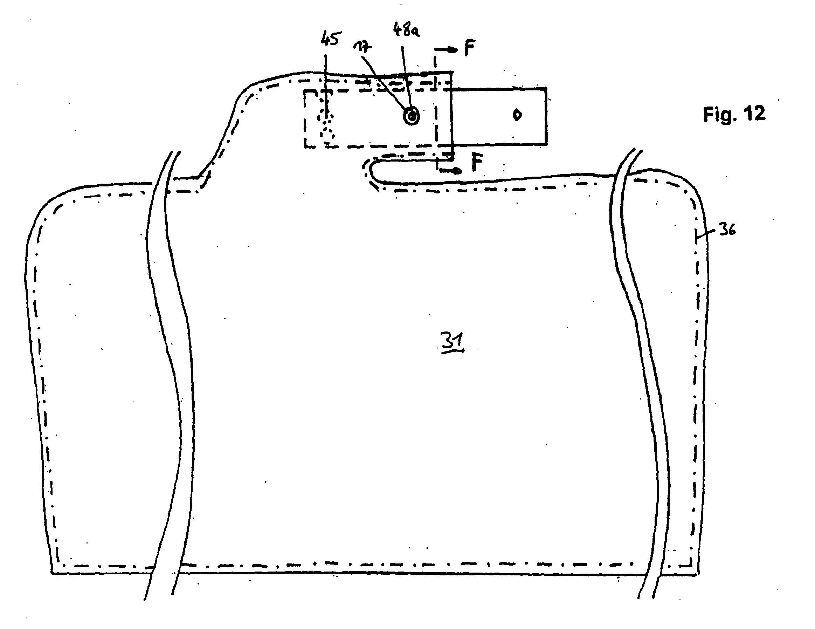

Die Figur 10 zeigt ein zweites Ausführungsbeispiel einer erfindungsgemäßen Gassack-Einheit in einem ersten Montagezustand. Ein solcher Gassack ist insbesondere als Vorhang-Gassack einsetzbar. Die Öffnung 34 für den Gasgenerator befindet sich auch hier im Rand des Gassacks. Der zugehörige Randbereich ist hier jedoch L-förmig ausgebildet. Die Figur 10 zeigt den Zustand vor Einfalten der beiden inneren Lagen, also der dritten und vierten Lage ins Innere des Gassacks. Der erste Zuschnitt 10 weist zwei Löcher 17 auf, welche nach dem Einfalten - Figur 11 - aufeinander zu liegen kommen. Durch diese beiden Löcher erstreckt sich im fertig montierten Zustand - Fig. 12 - einer der beiden Befestigungsbolzen 48a,b des Gasgenerators 40, welche später mit der Innenstruktur des Kraftfahrzeugs verschraubt werden. Durch dieses Verschrauben werden die Löcher 17 hinreichend abgedichtet. Somit dient der vordere Befestigungsbolzen 48a nicht nur der Befestigung des Gasgenerators 40 sondern auch der Befestigung des Gassacks und der Lagefixierung der beiden inneren Lagen 13,24 bezüglich der äußeren Lagen.

Wie man der Figur 13 entnimmt, ist hier nur eine zusammenhängende Tasche 39 vorhanden, die sich bei Betätigung des Gasgenerators füllt, so dass die beiden inneren Lagen 13,24 auf die Mantelfläche gepresst werden. Im Ruhezustand existiert ein Spalt S zwischen den inneren Lagen 11,13 und dem Gasgenerator 40. Dieser Spalt ist notwendig, um den vorderen Bolzen in den Kanal einführen zu können, so dass er durch die übereinander liegenden Löcher geführt werden kann.

Die Erfindung wurde hier anhand eines Ausführungsbeispiels dargestellt, bei dem der Gasgenerator in den Gassack hineinragt. Es ist jedoch klar, dass eine solche Abdichtung auch stattfindet, wenn sich der Gasgenerator vollständig innerhalb des Gassacks befindet; hierbei werden dritte Lage 13 und vierte Lage 24 unmittelbar aufeinander gepresst, wodurch ebenfalls eine Abdichtung erfolgt. Hierbei stört auch ein durch den Kanal 38 verlaufendes Zündkabel des Gasgenerators nicht, dieses wird von den beiden Lagen 13,24 umschlossen.

In der Regel wird eine Fixierung der inneren beiden Lagen bezüglich der äußeren beiden Lagen notwendig sein. Im ersten Ausführungsbeispiel wird diese Fixierung durch die Verbindungslinien, im zweiten Ausführungsbeispiel durch den vorderen Befestigungsbolzen erreicht. Es sich jedoch auch andere Fixierungsmöglichkeiten, wie beispielsweise punktuelles Verkleben, denkbar.

### Bezugszeichenliste

- 10: erster Zuschnitt
- 11: erste Lage
- 13: dritte Lage
- 13a: Kante
- 15: oberer Bereich
- 16: Linie
- 17: Loch
- 20: zweiter Zuschnitt
- 22: zweite Lage
- 24: vierte Lage
- 24a: Kante
- 25: oberer Bereich
- 26: Linie
- 31: Haupt-Gasraum
- 32: Rand
- 32a: erster Randabschnitt
- 32b: zweiter Randabschnitt
- 32c: dritter Randabschnitt
- 32d: vierter Randabschnitt
- 34: Öffnung
- 36: Naht
- 36a: erste Verbindungslinie
- 36b: zweite Verbindungslinie
- 38: Kanal
- 38a,b: Taille
- 39: Tasche
- 40: Gasgenrator
- 42: hinterer Abschnitt
- 43: mittlerer Abschnitt
- 44: vorderer Abschnitt
- 45: Ausströmöffnungen
- 48a,b: Befestigungsbolzen
- S: Spalt

## Patentansprüche

1. Gassack für ein Kraftfahrzeug mit einen Haupt-Gasraum (31) umschließenden, entlang eines Randes (32) miteinander verbundenen ersten und zweiten Lagen (11,22), welche die Seitenwänden des Gassacks bilden, und einer im Rand vorgesehenen Öffnung (34) zum Einführen eines Gasgenerators (40),
**dadurch gekennzeichnet, dass** im Bereich der Öffnung (34) eine dritte und eine vierte Lage (13,24) vorgesehen sind, welche sich zwischen der ersten und der zweiten Lage (11,22) befinden, so dass der Gassack im Bereich der Öffnung (34) derart vierlagig ausgebildet ist, dass sich von der Öffnung (34) ein Kanal (38) zum Haupt-Gasraum (31) erstreckt und zwischen erster (11) und dritter (13) und zweiter (22) und vierter (24) Lage eine sich parallel zum Kanal (38) erstreckende Tasche (39) gebildet ist, welche mit dem Haupt-Gasraum (31) verbunden ist.

2. Gassack nach Anspruch 1, **dadurch gekennzeichnet, dass** sich von der Öffnung (34) zwei den Kanal begrenzende Verbindungslinien (36a,36b) erstrecken, welche zumindest dritte und vierte Lage (13, 24) miteinander verbinden.

3. Gassack nach Anspruch 2, **dadurch gekennzeichnet, dass** die Verbindungslinien (36a,36b) alle vier Lagen (11,13 22,24) miteinander verbinden.

4. Gassack nach Anspruch 2 oder Anspruch 3, **dadurch gekennzeichnet, dass** die Verbindungslinien (36a,36b) so verlaufen, dass der Kanal (38) wenigstens eine Taille (38a,38b) aufweist.

5. Gassack nach einem der Ansprüche 2 bis 4 , **dadurch gekennzeichnet, dass** die Verbindungslinien durch Nähte oder Nahtabschnitte gebildet werden.

6. Gassack nach einem der Ansprüche 2 bis 5, **dadurch gekennzeichnet, dass** die Verbindungslinien durch Verschweißen oder Verkleben der Lagen gebildet werden.

7. Gassack nach einem der vorangehenden Ansprüche, **dadurch gekennzeichnet, dass** erste und dritte Lage (11,13) zu einem ersten Zuschnitt (10) und zweite und vierte Lage (22,24) zu einem zweiten Zuschnitt (20) gehören, wobei der Rand im Bereich der Öffnung (34) durch Umschlagen der Zuschnitte (10,20) gebildet ist.

8. Gassack-Einheit bestehend aus einem Gassack mit den Merkmalen eines der Ansprüche 1 bis 7 und einem Gasgenerator (40), welcher durch die Öffnung (34) in den Haupt-Gasraum (31) eingeführt ist.

9. Gassack-Einheit nach Anspruch 8, **dadurch gekennzeichnet, dass** sich ein hinterer Abschnitt (42) des Gasgenerators (40) außerhalb des Gassacks befindet.

10. Gassack-Einheit nach Anspruch 9, **dadurch gekennzeichnet, dass** sich im nicht aufgeblasenen Zustand des Gassacks ein Spalt (S) zwischen Gasgenerator und dritter und vierter Lage befindet, der beim Aufblasen des Gassacks geschlossen wird.

11. Gassack-Einheit nach Anspruch 9 oder Anspruch 10, **dadurch gekennzeichnet, dass** der Gasgenerator wenigstens einen Befestigungsbolzen (48a) aufweist, der sich durch Löcher (17) in zwei Lagen erstreckt.

## Claims

1. Airbag for a motor vehicle having a first and a second layer (11,22) forming the side walls of the airbag, surrounding a main gas chamber (31) and being connected to each other along an edge (32), and an opening (34) being located in said edge for inserting a gas generator (40),
**characterised in that** in the area of the opening (34) a third and a fourth layer (13,24) are provided between the first and the second layer (11,22) so that the airbag has four layers in the area of the opening (34) such that a channel (38) extends from the opening (34) to the main gas chamber (31) and that between first (11) and third (13) and second (22) and fourth (24) layer a pocket (39) extending parallel to the channel (38) and being connected to the main gas (31) chamber is formed.

2. Airbag according to claim 1, **characterised in that** from the opening (34) two connecting lines (36a,36b) limiting the channel extend, said connecting lines connecting at least the third and the fourth layer (13,24).

3. Airbag according to claim 2, **characterised in that** the connecting lines (36a, 36b) connect all four layers (11,13,22,24).

4. Airbag according to claim 2 or claim 3, **characterised in that** the connecting lines (36a,36b) are so formed that the channel shows at least one waist (38a,38b).

5. Airbag according to one of the claims 2 to 4, **characterised in that** the connecting lines are formed by seams or seam sections.

6. Airbag according to one of the claims 2 to 5, **characterised in that** the connecting lines are formed by welding or gluing.

7. Airbag according to one of the preceding claims, **characterised in that** first and third layer (11,13) belong to a first cutting (10) and second and fourth layer (22,24) belong to a second cutting (20) with the edge in the area of the opening (34) being formed by turning up the cuttings (10,20).

8. Airbag unit comprising an airbag with the features of one of the claims 1 to 7 and a gas generator being (40) inserted into the main gas chamber (31) through the opening (34).

9. Airbag unit according to claim 8, **characterised in that** a rear section (42) of the gas generator (40) is located outside the airbag.

10. Airbag unit according to claim 9, **characterised in that** in non-expanded state a clearance (S) is provided between the gas generator and third and fourth layer which is closed during filing of the airbag.

11. Airbag unit according to claim 9 or claim 10, **characterised in that** the gas generator has at least one fastening bolt (48a) extending through holes (17) in two layers.

## Revendications

1. Sac de gaz pour un véhicule automobile avec des premières et deuxièmes couches (11, 12) reliées l'une à l'autre le long d'un bord (32), entourant une chambre de gaz principale (31) et qui forment les parois latérales du sac de gaz, et avec une ouverture (34) prévue dans le bord servant à introduire un générateur de gaz (40),
**caractérisé en ce que** dans la zone de l'ouverture (34), une troisième et une quatrième couche (13, 24) sont prévues, lesquelles se trouvent entre la première et la deuxième couche (11, 22) de sorte que le sac de gaz est réalisé au niveau de l'ouverture (34) à quatre couches de telle sorte qu'un canal (38) s'étend de l'ouverture (34) à la chambre de gaz principale (31) et une poche (39) s'étendant parallèlement au canal (38) est formée entre la première (11) et la troisième (13) et la deuxième (22) et la quatrième (24) couche, laquelle poche est reliée à la chambre de gaz principale (31).

2. Sac de gaz selon la revendication 1, **caractérisé en ce que** deux lignes d'assemblage (36a, 36b) délimitant le canal, qui relient l'une à l'autre au moins la troisième et la quatrième couche (13, 24), partent de l'ouverture (34).

3. Sac de gaz selon la revendication 2, **caractérise en ce que** les lignes d'assemblage (36a, 36b) relient l'une l'autre les quatre couches (11, 13, 22, 24).

4. Sac de gaz selon la revendication 2 ou la revendication 3, **caractérisé en ce que** les lignes d'assemblage (36a, 36b) s'étendent de telle sorte que le canal (38) présente au moins une taille (38a, 38b).

5. Sac de gaz selon l'une quelconque des revendications 2 à 4, **caractérisé en ce que** les lignes d'assemblage sont formées par des coutures ou des sections de couture.

6. Sac de gaz selon l'une quelconque des revendications 2 à 5, **caractérisé en ce que** les lignes d'assemblage sont formées par soudage ou collage des couches.

7. Sac de gaz selon l'une quelconque des revendications précédentes, **caractérisé en ce que** la première et la troisième couche (11, 13) appartiennent à une première pièce découpée (10) et la deuxième et la quatrième couche (22, 24) à une deuxième pièce découpée (20), le bord dans la zone de l'ouverture (34) étant formé en rabattant les nièces découpées (10, 20).

8. Unité de sac de gaz constituée d'un sac de gaz présentant les caractéristiques de l'une quelconque des revendications 1 à 7 et d'un générateur de gaz (40), qui est introduit par l'ouverture (34) dans la chambre à gaz principale (31).

9. Unité de sac de gaz selon la revendication 8, **caractérisée en ce qu'**une section arrière (42) du générateur de gaz (40) se situe à l'extérieur du sac de gaz.

10. Unité de sac de gaz selon la revendication 9, **caractérisée en ce que** lorsque le sac de gaz est à l'état non gonflé, il y a une fente (S) entre le générateur de gaz et la troisième et la quatrième couche, qui est fermée lors du gonflage du sac de gaz.

11. Unité de sac de gaz selon la revendication 9 ou la revendication 10, **caractérisée en ce que** le générateur de gaz présente au moins un boulon de fixation (48a), qui s'étend à travers les trous (17) dans deux couches.
